# EUROPÄISCHE PATENTSCHRIFT

(11) **EP 3 490 746 B1**
(45) Veröffentlichungstag und Bekanntmachung des Hinweises auf die Patenterteilung: **20.05.2020**
(21) Anmeldenummer: 17743344.8
(22) Anmeldetag: 26.07.2017
(51) Int. Cl.: B23B 51/04, B23D 77/00

(54) **ZERSPANUNGSWERKZEUG**
MACHINING TOOL
OUTIL D'USINAGE PAR ENLÈVEMENT DE COPEAUX

(30) Priorität: 27.07.2016 DE 102016113816
(43) Veröffentlichungstag der Anmeldung: 05.06.2019
(73) Patentinhaber: Komet Group GmbH, 74354 Besigheim (DE)
(72) Erfinder: SCHMID, Frank, 73779 Deizisau (DE); EDELMANN, Karl-Heinz, 71139 Ehningen (DE)
(74) Vertreter: Pfiz, Thomas
(86) Internationale Anmeldenummer: PCT/EP2017/068919
(87) Internationale Veröffentlichungsnummer: WO 2018/019901

(56) Entgegenhaltungen:
- EP-A1- 2 522 447
- WO-A1-2009/071288
- DE-A1-102008 003 856
- DE-A1-102010 021 212
- DE-B3-102013 108 825
- DE-U1-202007 016 817

## Beschreibung

Die Erfindung betrifft ein Zerspanungswerkzeug gemäß dem Oberbegriff des Anspruchs 1. Ein solches Zerspanungswerkzeug ist aus der DE 10 2013 108 825 B bekannt.

Bei konventionellen Zerspanungswerkzeugen, z.B. Vollbohrer, Aufbohrer, Senkwerkzeuge und Reibwerkzeuge, sind die Spannuten radial nach außen hin geöffnet. Bedingt durch die Fliehkraft werden die Späne gegen die Bohrungswandung geschleudert und können diese beschädigen und/oder in Aussparungen des Bauteils verbeiben. Oft sind die Kühlkanalaustritte gegen den Spanfluss gerichtet. Dadurch werden die Späne nicht gezielt aus dem Bauteil befördert, sondern in ihrem Abfluss sogar noch behindert. Durch Spanbruchgeometrie kann gezielt für kurze Späne gesorgt werden. Aber gerade diese kürzeren Späne verbleiben bevorzugt in Hohlräumen und Querbohrungen des Bauteils und erfordern einen hohen Reinigungsaufwand. Die gefertigten Bauteile müssen einem aufwendigen Kontrollprozess auf verbleibende Restspäne unterzogen werden.

Ausgehend hiervon liegt der Erfindung die Aufgabe zugrunde, die im Stand der Technik bekannten Zerspanungswerkzeuge zur Vermeidung der vorgenannten Nachteile weiter zu verbessern und eine gezielte Ausleitung von Spänen zur Erreichung einer hohen Fertigungsqualität zu ermöglichen.

Zur Lösung dieser Aufgabe wird die Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, einen Leitkörper gleichsam als Spänespoiler vorzusehen. Dementsprechend wird erfindungsgemäß vorgeschlagen, dass an den Spannuten des Grundkörpers jeweils ein Spannutdeckel montiert ist, der einen an das Schneidelement anschließenden Spanabfuhrbereich der Spannut nach außen abdeckt. Die an der Stirnschneide erzeugten Späne können dadurch zwangsgeführt und gezielt nach hinten ausgeleitet werden, ohne in Berührung mit der Bohrungswand zu gelangen. Dies wird beim Werkzeugvorschub noch dadurch unterstützt, dass ständig neues Spanmaterial nachgeliefert wird. Die Späne können somit auch nicht in Freiräume des Bauteils gelangen, sondern werden vollständig zum Ende der Spannut geleitet und nach außen abtransportiert.

Die Erfindung sieht vor, dass der Spannutdeckel als ein aus einem Pulvermaterial additiv aufgebautes Formteil insbesondere durch selektives Laserschmelzen gebildet ist. Dadurch ist es möglich, den Spannutdeckel als komplexes Formteil zu schaffen, das eine Vielzahl von Funktionalitäten verkörpert.

In diesem Zusammenhang ist es auch von Vorteil, wenn der Spannutdeckel eine den Spanabfuhrbereich begrenzende, durch eine variierende Wandstärke gebildete innere Spanleitkontur aufweist. Dadurch kann die Abfuhr der Späne prozesssicher gewährleistet werden, wobei auch der Verschleiß des Grundkörpers verringert werden kann.

Vorteilhafterweise besitzt der Spannutdeckel eine als Segment die Drehachse bereichsweise, vorzugsweise über einen Winkelbereich von weniger als 180°, umgreifende Seitenwand, so dass die Späne abgeleitet werden, ohne die Bohrungswand zu berühren.

Um einen homogenen Werkzeugkörper zu schaffen, ist es günstig, wenn die Außenseite der Seitenwand teilzylindrisch ausgebildet ist und flächenbündig an die angrenzende Außenkontur des Grundkörpers anschließt.

Eine weitere vorteilhafte Ausgestaltung zur Spanführung sieht vor, dass der Spannutdeckel eine in Vorschubrichtung weisende, den Spanabfuhrbereich unter Freihaltung einer Spaneinlassöffnung überdeckende Stirnwand besitzt. Durch die Stirnwand wird somit ein ungewollter stirnseitiger Wiederaustritt von zerspantem Material vermieden.

Um eine Kollision mit dem Bohrungsboden zu vermeiden, ist es von Vorteil, wenn die Form der Stirnwand des Spannutdeckels an die in einem zu bearbeitenden Werkstück erzeugte Stirnschneidkontur angepasst ist.

Eine weitere Verbesserung lässt sich dadurch erreichen, dass die Stirnwand des Spannutdeckels im axialen Abstand zu der Schneidkante des Schneidelements angeordnet ist, so dass der Zerspanungsprozess nicht behindert wird.

In diesem Zusammenhang ist es auch vorteilhaft, wenn der axiale Abstand in Abhängigkeit von dem Vorschub pro Umdrehung des Grundkörpers und/oder der Zahl der Schneidelemente festgelegt ist.

Zu Einleitung der erzeugten Späne in den geschlossenen Spanabfuhrbereich ist es günstig, wenn zwischen dem Spannutdeckel und der Schneidkante des Schneidelements eine Spaneinlassöffnung freigehalten ist.

Da die Zerspanungsgeschwindigkeit zur Drehachse hin geringer ist und sich dort eher Späneknäuel bilden, sollte die Öffnungsweite der Spaneinlassöffnung in einem radial innenliegenden Bereich größere als in einem radial außenliegenden Bereich sein.

Um das Zerspanungsvolumen sicher aufnehmen zu können, ist es vorteilhaft, wenn die Öffnungsweite der Spaneinlassöffnung im Bereich von 0,2 bis 1,0 mm liegt.

Eine weitere vorteilhafte Ausgestaltung sieht vor, dass die Spannut einen von dem Spannutdeckel freigehaltenen Nutauslauf aufweist. Bevorzugt liegt der Nutauslauf stets außerhalb des Werkstücks, wobei die axiale Erstreckung des Spannutdeckels entsprechend angepasst ist.

Erfindungsgemäß ist durch eine Wandpartie des Spannutdeckels ein zumindest abschnittsweise räumlich gekrümmt verlaufender Kühlmittelkanal hindurchgeführt, so dass neben der Kühlung im Bereich der Schneide auch die Spanabfuhr unterstützt werden kann.

In diesem Zusammenhang ist es auch von Vorteil, wenn der Kühlmittelkanal bogenförmig an einem Schraubkanal des Spannutdeckels vorbeigeführt ist.

Vorteilhafterweise mündet der Kühlmittelkanal über eine entgegen der Vorschubrichtung orientierte Auslassöffnung in den Spanabfuhrbereich, so dass der Kühlmittelstrom die Spanabfuhr befördert.

Um eine zuverlässigen Kühlmittelfluss auch bei kleinen Querschnitten zu gewährleisten, ist es vorteilhaft, wenn der Durchlassquerschnitt des Kühlmittelkanals in seiner Durchflussrichtung vorzugsweise kontinuierlich abnimmt.

Zur sicheren Befestigung an dem Grundkörper ist es vorteilhaft, wenn der Spannutdeckel einen Fortsatz zur kopfseitigen Lagerung einer vorzugsweise in den Grundkörper einschraubbaren Befestigungsschraube aufweist, und wenn der Fortsatz formschlüssig in eine Flanke der Spannut eingreift.

Weitere vorteilhafte Ausgestaltungen sehen vor, dass
- das Schneidelement auf den Grundkörper aufgelötet oder als Wechselschneidplatte ausgebildet ist;
- das Schneidelement aus einem Material ausgewählt aus der Gruppe poly-kristalliner Diamant, CVD-Dickschichtdiamant, Keramik, Hartmetall oder Cermet gebildet ist;
- der Grundkörper konventionell durch zerspanende Endbearbeitung gefertigt ist;
- der Grundkörper an seinem hinteren Ende eine Schnittstelle zum Anschluss an eine Maschinenspindel aufweist.

Im Folgenden wird die Erfindung anhand der in der Zeichnung schematisch dargestellten Ausführungsbeispiele näher erläutert. Es zeigen:
- Fig. 1: ein Maschinenbohrwerkzeug zum Aufbohren eines Werkstücks mit einem Spannutdeckel in perspektivischer Darstellung;
- Fig. 2: eine Seitenansicht des Werkzeugs nach Fig. 1;
- Fig. 3: einen Radialschnitt entlang der Linie 3 - 3 der Fig. 2;
- Fig. 4: einen ausschnittsweisen Axialschnitt des Werkezugs im Bereich des Spannutdeckels;
- Fig. 5: den Spannutdeckel in perspektivischer Darstellung;
- Fig. 6: den Verlauf von Kühlmittelkanälen durch den Kopf des Werkzeugs.

Das in der Zeichnung dargestellte Bohrwerkzeug 10 umfasst einen Grundkörper 12, mehrere im Bereich von Spannuten 14 des Grundkörpers 12 gruppenweise fixierte Schneidelemente 16, 18 und den Spannuten 14 einzeln zugeordnete und deren Spanabfuhrbereich 20 nach außen abdeckende Spannutdeckel 22.

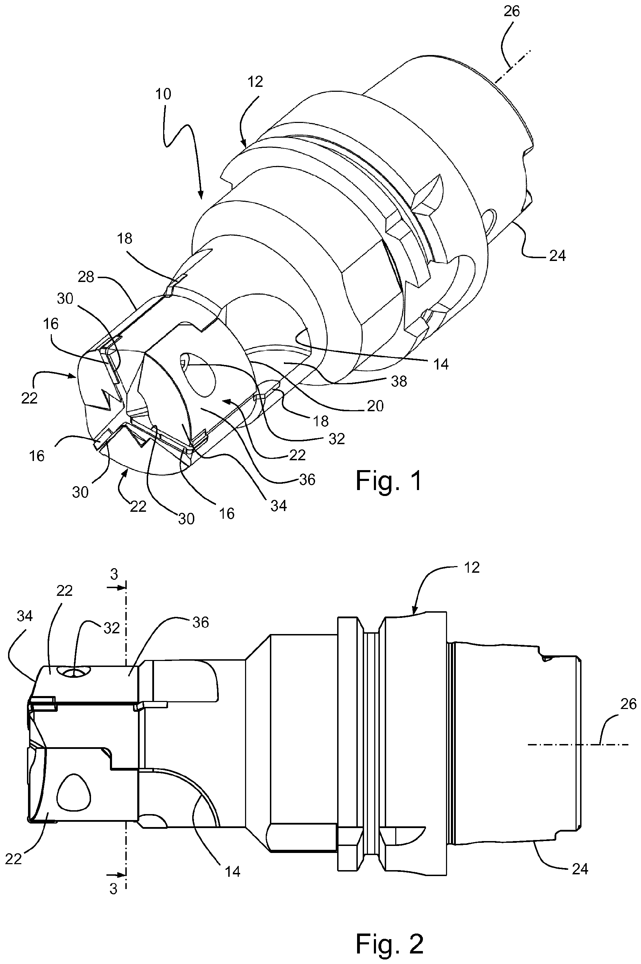

Wie aus Fig. 1 und 2 ersichtlich, besitzt der Grundkörper 12 an seinem rückseitigen Abschnitt ein zum Einspannen in die Spindel einer Werkzeugmaschine geeignetes Spannteil 24, zum Beispiel eine ABS-Schnittstelle. Damit lässt sich das Bohrwerkzeug 10 um eine Drehachse 26 rotierend antreiben und zugleich unter Vorschub in Richtung der Drehachse 26 bewegen. Der Grundkörper 12 ist konventionell aus einem Werkzeugstahl gebildet und wird durch Zerspanen in seine gezeigte, nach vorne zylindrisch abgestufte Endform gebracht. Dabei sind die drei Spannuten 14 ausgehend von der Werkzeugstirnseite als Geradnut mit spitzwinklig zueinander angeordneten Flanken in einen den Werkzeugkopf bildenden Stufenschaft 28 eingebracht.

Eine Gruppe von drei im Winkelabstand von 120° voneinander angeordneten vorderen Schneidelementen 16 besitzt jeweils eine Stirnschneide 30, die im Wesentlichen senkrecht zur Drehachse 26 verläuft. Eine lange Schneide ist radial nach außen abgestuft, während sich die übrigen beiden Schneiden von außen her bis zum halben Radius überdecken. In einem Konusabschnitt des Stufenschafts 28 ist eine weitere Gruppe von drei Schneidelementen 18 zum Ansenken der durch die Stirnschneiden 30 erzeugten Sacklochbohrung angebracht.

Die Schneidelemente 16, 18 können als PKD-Schneiden auf den Grundkörper 12 aufgelötet sein. Denkbar ist auch der Einsatz von Wechselschneidplatten, die ggf. über Kassetten an dem Grundkörper 12 befestigt sind.

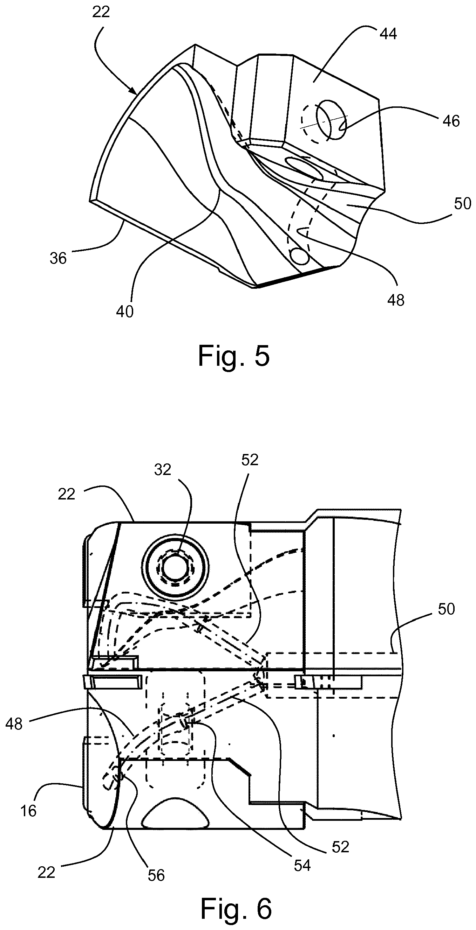

Die Spannutdeckel 22 sind als gesonderte Formteile (siehe Fig. 5) durch selektives Laserschmelzen additiv bzw. generativ aufgebaut. Bei diesem 3D-Formgebungs- bzw. Druckverfahren wird auf einer Bauplattform eine dünne Schicht eines Pulvermaterials aufgebracht. Sodann wird das Pulvermaterial mittels eines Lasers lokal umgeschmolzen, so dass sich nach dem Erstarren eine feste Materialschicht bildet. Ist das Material erstarrt, wird die Bauplattform entsprechend der Schichtdicke abgesenkt und eine neue Pulverschicht aufgetragen. Auf diese Weise können Werkzeuge oder Formen entfallen, wobei der Formling mit großer Geometriefreiheit herstellbar ist. Das selektive Laserschmelzen (SLM, Selective Laser Melting) ist somit ein additiver Prozess im Gegensatz zur subtraktiven zerspanenden Fertigung des Grundkörpers 12.

Die Spannutdeckel 22 sind jeweils mittels einer Befestigungsschraube 32 lösbar an den Grundkörper 12 angeschraubt. Sie besitzen eine in Vorschubrichtung weisende, im Wesentlichen in einer Radialebene bezüglich der Drehachse liegende Stirnwand 34 und eine die Drehachse 26 segmentförmig umgreifende Seitenwand 36.

Die Form der Stirnwand 34 ist an die Stirnschneidkontur angepasst. Weiterhin ist die Stirnwand im axialen Abstand zu der Schneidkante 30 des zugehörigen Stirnschneidelements 16 angeordnet. Dieser Abstand entspricht mindestens dem Umdrehungsvorschub pro Stirnschneidelement 16. Je mehr Schneidelemente 16 vorhanden sind, desto geringer kann der axiale Abstand gewählt werden. Auf diese Weise wird ein störungsfreier Zerspanungsprozess ermöglicht und eine Kollision der Stirnwand 34 mit dem Boden der Werkstückbohrung vermieden.

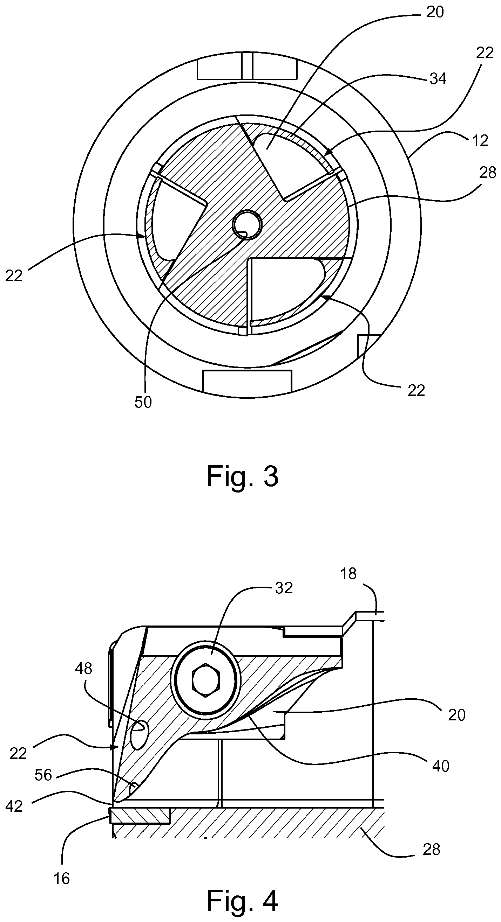

Wie auch aus Fig. 3 ersichtlich, ist die Seitenwand 34 des Spannutdeckels 22 außen teilzylindrisch ausgebildet, so dass eine mit der Außenseite des Grundkörpers 12 flächenbündige Außenkontur und ein insgesamt homogener Werkzeugkörper erreicht wird. Der Spanabfuhrbereich 20 ist damit radial nach außen vollständig geschlossen. Dadurch können die erzeugten Späne nicht in Freiräume des Werkstücks bzw. Bauteils gelangen und werden vollständig zum offenen Auslauf 38 der Spannut 14 geleitet und dort nach außen abtransportiert.

Wie am besten aus Fig. 4 und 5 zu ersehen, besitzt der Spannutdeckel 22 eine innere Spanleitkontur 40, die den Spanabfuhrbereich 20 begrenzt und für einen optimierten Spanfluss sorgt. Dadurch kann auch erreicht werden, dass keine Auswaschungen durch den Spanfluss am Grundkörper 12 entstehen. Die Spanleitkontur 40 ist derart gestaltet, dass der Spanabfuhrbereich 20 entgegen der Vorschubrichtung erweitert wird.

Fig. 4 lässt auch erkennen, dass zwischen dem Spannutdeckel 22 und dem Schneidelement 16 eine spaltförmige Spaneinlassöffnung 42 freigehalten ist. Deren Öffnungsweite richtet sich nach der Vorschubgeschwindigkeit und der erzeugten Spandicke und sollte zwischen 0,2 und 1,0 mm liegen. Zweckmäßig ist die Öffnungsweite der Spaneinlassöffnung 42 in einem radial innenliegenden Bereich größere als in einem radial außenliegenden Bereich, um infolge der innen geringeren Schnittgeschwindigkeit stärker gequetschte Späne noch aufnehmen zu können.

Fig. 5 zeigt den Spannutdeckel 22 als gesondertes Formteil, an dem ein Fortsatz 44 zur kopfseitigen Lagerung der Befestigungsschraube 32 angeformt ist. Der Fortsatz 44 weist hierfür einen Schraubkanal 46 auf, der im montierten Zustand tangential zur Drehachse 26 verläuft. Um eine definierte Verbindung auch unter Belastung sicherzustellen, ist der Fortsatz 44 als Formschlusskörper ausgebildet, der in eine komplementäre Kontur in der Flanke der Spannut 14 formschlüssig eingreift.

Fig. 5 veranschaulicht auch in gestrichelten Linien einen Kühlmittelkanal 48, der durch eine Wandpartie 50 des Spannutdeckels 22 hindurchgeführt ist und dabei einem räumlich gekrümmten Verlauf folgt. Dabei wird der Kühlmittelkanal 48 bogenförmig an dem Schraubkanal 46 vorbeigeführt. Zweckmäßig ist der Durchlassquerschnitt des Kühlmittelkanals 48 variierend gestaltet, so dass keine Versackungsräume entstehen und eine Minimalmengenschmierung möglich wird. Eine solche geometrisch komplexe Formgebung ist praktisch nur durch das additive Fertigungsverfahren möglich.

Wie in Fig. 6 gezeigt, wird das Kühlmittel bzw. der Kühlschmierstoff von der Rückseite des Werkzeugs 10 her über einen zentralen Zuführkanal 50 in dem Grundkörper 12 eingespeist. Von dort verlaufen Schrägbohrungen 52 über eine Anschlussstelle 54 der Spannutdeckel 22 zu dem jeweiligen Kühlmittelkanal 48. Dessen Verlauf ist in Bogenform so angeordnet, dass der Kühlmittelausstoß über eine Auslassöffnung 56 gegen die Vorschubrichtung erfolgt. Auf diese Weise kann der Spanfluss zum Nutauslauf 38 hin zielgerichtet unterstützt werden und die maximale Rückspülwirkung erzielt werden.

## Patentansprüche

1. Zerspanungswerkzeug, insbesondere zum Bohren, Aufbohren oder Reiben von Bohrungen, mit einem um eine Drehachse (26) rotierbaren, in einer Vorschubrichtung entlang der Drehachse (26) bewegbaren Grundkörper (12), mindestens einem an dem Grundkörper (12) fixierten Schneidelement (16), das eine in Vorschubrichtung weisende Stirnschneide (30) aufweist, einer dem Schneidelement (16) zugeordneten, durch eine Ausnehmung in dem Grundkörper (12) gebildeten Spannut (14), und einem an dem Grundkörper (12) montierten Spannutdeckel (22), der einen an das Schneidelement (16) anschließenden Spanabfuhrbereich (20) der Spannut (14) nach außen abdeckt, **dadurch gekennzeichnet, dass** der Spannutdeckel (22) als ein aus einem Pulvermaterial additiv aufgebautes Formteil gebildet ist, und dass durch eine Wandpartie (50) des Spannutdeckels (22) ein zumindest abschnittsweise räumlich gekrümmt verlaufender Kühlmittelkanal (48) hindurchgeführt ist.

2. Zerspanungswerkzeug nach Anspruch 1, **dadurch gekennzeichnet, dass** der Spannutdeckel (22) durch selektives Laserschmelzen gebildet ist.

3. Zerspanungswerkzeug nach Anspruch 1 oder 2, **dadurch gekennzeichnet, dass** der Spannutdeckel (22) eine den Spanabfuhrbereich (20) begrenzende, durch eine variierende Wandstärke gebildete innere Spanleitkontur (40) aufweist.

4. Zerspanungswerkzeug nach einem der Ansprüche 1 bis 3, **dadurch gekennzeichnet, dass** der Spannutdeckel (22) eine die Drehachse (26) bereichsweise umgreifende Seitenwand (36) aufweist.

5. Zerspanungswerkzeug nach Anspruch 4, **dadurch gekennzeichnet, dass** die Außenseite der Seitenwand (36) teilzylindrisch ausgebildet ist und flächenbündig an die angrenzende Außenkontur des Grundkörpers (12) anschließt.

6. Zerspanungswerkzeug nach einem der Ansprüche 1 bis 5, **dadurch gekennzeichnet, dass** der Spannutdeckel (22) eine in Vorschubrichtung weisende Stirnwand (34) besitzt.

7. Zerspanungswerkzeug nach Anspruch 6, **dadurch gekennzeichnet, dass** die Stirnschneide (30) eine Stirnschneidkontur in einem zu bearbeitenden Werkstück erzeugt, und dass die Form der Stirnwand (34) des Spannutdeckels (22) an die Stirnschneidkontur angepasst ist.

8. Zerspanungswerkzeug nach Anspruch 6 oder 7, **dadurch gekennzeichnet, dass** die Stirnwand (34) des Spannutdeckels (22) im axialen Abstand zu der Stirnschneide (30) des Schneidelements (16) angeordnet ist.

9. Zerspanungswerkzeug nach einem der Ansprüche 1 bis 8, **dadurch gekennzeichnet, dass** zwischen dem Spannutdeckel (22) und der Stirnschneide (30) des Schneidelements (16) eine Spaneinlassöffnung (42) freigehalten ist.

10. Zerspanungswerkzeug nach Anspruch 9, **dadurch gekennzeichnet, dass** die Öffnungsweite der Spaneinlassöffnung (42) in einem radial innenliegenden Bereich größere als in einem radial außenliegenden Bereich ist.

11. Zerspanungswerkzeug nach einem der Ansprüche 1 bis 10, **dadurch gekennzeichnet, dass** die Spannut (14) einen von dem Spannutdeckel (22) freigehaltenen Nutauslauf (38) aufweist.

12. Zerspanungswerkzeug nach einem der Ansprüche 1 bis 11, **dadurch gekennzeichnet, dass** der Kühlmittelkanal (48) bogenförmig an einem Schraubkanal (46) des Spannutdeckels (22) vorbeigeführt ist.

13. Zerspanungswerkzeug nach einem der Ansprüche 1 bis 12, **dadurch gekennzeichnet, dass** der Kühlmittelkanal (48) über eine entgegen der Vorschubrichtung orientierte Auslassöffnung (56) in den Spanabfuhrbereich (20) mündet.

14. Zerspanungswerkzeug nach einem der Ansprüche 1 bis 13, **dadurch gekennzeichnet, dass** der Durchlassquerschnitt des Kühlmittelkanals (48) in seiner Durchflussrichtung vorzugsweise kontinuierlich abnimmt.

15. Zerspanungswerkzeug nach einem der Ansprüche 1 bis 14, **dadurch gekennzeichnet, dass** der Spannutdeckel (22) einen Fortsatz (44) zur kopfseitigen Lagerung einer vorzugsweise in den Grundkörper (12) einschraubbaren Befestigungsschraube (32) aufweist, und dass der Fortsatz (44) formschlüssig in eine Flanke der Spannut (14) eingreift.

## Claims

1. A machining tool, in particular for boring, drilling or reaming bore holes, comprising a base body (12) rotatable about a rotary axis (26) and movable in a feed direction along the rotary axis (26), at least one cutting element (16) fixed on the base body (12)and having a front cutting edge (30) pointing in the feed direction, a flute (14) assigned to the cutting element (16) and formed by a recess in the base body (12), and a flute cover (22) installed at the base body (12), which outwardly covers a chip removal area (20) of the flute (14) adjoining the cutting element (16), **characterized in that** the flute cover (22) is formed as a molded part additively constructed from a powder material, and that a coolant channel (48) which at least in sections runs in a spatially curved manner is passed through a wall portion (50) of the flute cover (22).

2. The machining tool as recited in claim 1, **characterized in that** the flute cover (22) is formed by selective laser melting.

3. The machining tool as recited in claim 1 or 2, **characterized in that** the flute cover (22) has an inner chip guiding contour (40) delimiting the chip removal area (20) and formed by varying wall strength.

4. The machining tool as recited in one of claims 1 through 3, **characterized in that** the flute cover (22) has a side wall (36) engaging in sections around the rotary axis (26).

5. The machining tool as recited in claim 4, **characterized in that** the outside of the side wall (36) is designed partially cylindrically and adjoins flushly with the adjacent outer contour of the base body (12).

6. The machining tool as recited in one of claims 1 through 5, **characterized in that** the flute cover (22) has a front wall (34) pointing in the feed direction.

7. The machining tool as recited in claim 6, **characterized in that** the front cutting edge (30) generates a front cutting contour in a workpiece to be processed and that the shape of the front wall (34) of the flute cover (22) is adapted to the front cutting contour.

8. The machining tool as recited in one of claims 6 or 7, **characterized in that** the front wall (34) of the flute cover (22) is disposed at an axial distance to the front cutting edge (30) of the cutting element (16).

9. The machining tool as recited in one of claims 1 through 8, **characterized in that** between the flute cover (22) and the cutting edge (30) of the cutting element (16) a chip inlet opening (42) is kept free.

10. The machining tool as recited in claim 9, **characterized in that** the opening width of the chip inlet opening (42) is greater in a radially inner area than in a radially outer area.

11. The machining tool as recited in one of claims 1 through 10, **characterized in that** the flute (14) has a flute outlet (38) kept free from the flute cover (22).

12. The machining tool as recited in one of claims 1 through 11, **characterized in that** the coolant channel (48) is guided arcuately past a screw channel (46) of the flute cover (22).

13. The machining tool as recited in one of claims 1 through 12, **characterized in that** the coolant channel (48) runs via an outlet opening (56) oriented against the feed direction into the chip removal area (20).

14. The machining tool as recited in one of claims 1 through 13, **characterized in that** the passage cross section of the coolant channel (48) in its through-flowing direction diminishes preferably continuously.

15. The machining tool as recited in one of claims 1 through 14, **characterized in that** the flute cover (22) has an extension (44) for the head-sided mounting of a fastening screw (32) preferably screwable into the base body (12), and that the extension (44) positively engages into a flank of the flute (14).

## Revendications

1. Outil d'usinage par enlèvement de copeaux, en particulier pour le perçage, l'alésage ou l'abrasage de forures, avec un corps de base (12) tournant autour d'un axe de rotation (26) et se déplaçant dans une direction d'avance le long de l'axe de rotation (26), au moins un élément tranchant (16) fixé au corps de base (12) qui comprend un tranchant frontal (30) face à la direction d'avance, une rainure à copeaux (14) associée à l'élément tranchant, formée par un évidement dans le corps de base (12), et un recouvrement de la rainure à copeaux (22) assemblé sur le corps de base (12), qui recouvre par l'extérieur une zone (20) de la rainure à copeaux (14) pour l'évacuation des copeaux aboutée à l'élément tranchant (16), **caractérisé en ce que** le recouvrement de la rainure à copeaux (22) est formé comme une pièce moulée constituée comme additif de matière pulvérulente, et **en ce qu'**un canal d'agent réfrigérant (48) passant au moins en partie recourbé dans l'espace est conduit à travers une section de paroi (50) du recouvrement de la rainure à copeaux (22).

2. Outil d'usinage par enlèvement de copeaux selon la revendication 1, **caractérisé en ce que** le recouvrement de la rainure à copeaux (22) est formé par fusion laser sélective.

3. Outil d'usinage par enlèvement de copeaux selon la revendication 1 ou 2, **caractérisé en ce que** le recouvrement de la rainure à copeaux (22) comprend un profil de guidage des copeaux (40) intérieur délimitant la zone pour l'évacuation des copeaux (20) et formé d'une épaisseur qui est variable.

4. Outil d'usinage par enlèvement de copeaux selon l'une des revendications 1 à 3, **caractérisé en ce que** le recouvrement de la rainure à copeaux (22) comprend une paroi latérale (36) entourant en partie l'axe de rotation (26).

5. Outil d'usinage par enlèvement de copeaux selon la revendication 4, **caractérisé en ce que** le côté extérieur de la paroi latérale (36) est réalisé partiellement cylindrique et est raccordé affleurant au profil extérieur contigu du corps de base (12).

6. Outil d'usinage par enlèvement de copeaux selon l'une des revendications 1 à 5, **caractérisé en ce que** le recouvrement de la rainure à copeaux (22) possède une paroi frontale (34) face à la direction d'avance.

7. Outil d'usinage par enlèvement de copeaux selon la revendication 6, **caractérisé en ce que** le tranchant frontal (30) produit un profil tranchant frontal dans une pièce à usiner et **en ce que** la forme de la paroi frontale (34) du recouvrement de la rainure à copeaux (22) est adapté au profil tranchant frontal.

8. Outil d'usinage par enlèvement de copeaux selon la revendication 6 ou 7, **caractérisé en ce que** la paroi frontale (34) du recouvrement de la rainure à copeaux (22) est disposée à une distance axiale par rapport au tranchant frontal (30) de l'élément tranchant (16).

9. Outil d'usinage par enlèvement de copeaux selon l'une des revendications 1 à 8, **caractérisé en ce qu'**entre le recouvrement de la rainure à copeaux (22) et le tranchant frontal (30) de l'élément tranchant (16) un orifice pour l'entrée des copeaux (42) est gardé libre.

10. Outil d'usinage par enlèvement de copeaux selon la revendication 9, **caractérisé en ce que** la largeur d'orifice de l'orifice pour l'entrée des copeaux (42) est dans une zone radialement intérieure plus grande que dans une zone radialement extérieure.

11. Outil d'usinage par enlèvement de copeaux selon l'une des revendications 1 à 10, **caractérisé en ce que** la rainure à copeaux (14) comprend un écoulement de la rainure (38) maintenu libre par le recouvrement de la rainure à copeaux (22).

12. Outil d'usinage par enlèvement de copeaux selon l'une des revendications 1 à 11, **caractérisé en ce que** le canal d'agent réfrigérant (48) est conduit en forme d'arc auprès d'un canal fileté (46) du recouvrement de la rainure à copeaux (22).

13. Outil d'usinage par enlèvement de copeaux selon l'une des revendications 1 à 12, **caractérisé en ce que** le canal d'agent réfrigérant (48) débouche dans la zone d'évacuation des copeaux (20) par un orifice de sortie (56) orienté à contresens de la direction d'avance.

14. Outil d'usinage par enlèvement de copeaux selon l'une des revendications 1 à 13, **caractérisé en ce que** la section transversale de passage du canal d'agent réfrigérant (48) diminue dans sa direction de flux de préférence en continu.

15. Outil d'usinage par enlèvement de copeaux selon l'une des revendications 1 à 14, **caractérisé en ce que** le recouvrement de la rainure à copeaux (22) comprend un prolongement (44) pour le logement côté tête d'une vis de fixation (32) à visser de préférence dans le corps de base (12) et **en ce que** le prolongement (44) s'engage par emboîtement dans un flanc de la rainure à copeaux (14).
